# EUROPEAN PATENT SPECIFICATION

(11) **EP 0 885 121 B1**
(45) Date of publication and mention of the grant of the patent: **13.09.2006**
(21) Application number: 97952900.5
(22) Date of filing: 08.12.1997
(51) Int. Cl.: B32B 27/32, C08L 23/16

(54) **TWO-LAYER POLYOLEFIN THERMOSHRINKABLE FILM**
ZWEISCHICHTIGER, HEISSSCHRUMPFBARER POLYOLEFINFILM
FILM AMELIORE DE POLYOLEFINE THERMORETRACTABLE A DEUX COUCHES

(30) Priority: 11.12.1996 EP 96203514
(43) Date of publication of application: 23.12.1998
(73) Proprietor: Basell Poliolefine Italia S.r.l., 20124 Milano (IT)
(72) Inventor: PERDOMI, Gianni, I-44100 Ferrara (IT); COMETTO, Claudio, I-40141 Bologna (IT)
(74) Representative: Gaverini, Gaetano Luigi Attilio
(86) International application number: PCT/EP1997/006848
(87) International publication number: WO 1998/025765

(56) References cited:
- EP-A- 0 377 121
- WO-A-97/18083
- WO-A-97/22664
- US-A- 5 419 934
- US-A- 5 455 303

## Description

The present invention concerns the preparation of improved thermoshrinkable hoods for palletized goods. In particular the invention concerns polyolefin thermoshrinkable films for the production of non sticking hoods especially useful for overwrapping goods packed in low density polyethylene (LDPE) sacks.

For shrinking pallet hoods, the following film properties are very important: tension development upon heating and tension retention, shrink balance between machine and transversal direction, puncture resistance, stiffness, sealing properties.

Most commonly used polymer for the preparation of hoods is low density polyethylene, which has said properties at a suitable level and at the same time is not expensive.

Low density polyethylene, however, is commonly used also for packing goods, particularly in the industrial sector (chemicals, fertilizers, etc.). Overwrapping of the low density polyethylene sacks with a hood of the same type of polymer is not convenient, since heating to induce thermoshrinking of the hood may effect a softening not only of the hood but also of the sacks, with the consequent adhesion of the hood to the sacks. This may cause the rupture of the sacks, when the hood is taken away.

A better performance from this point of view do have coextruded films of LDPE and other polyolefins, in particular linear low density polyethylene. Films of this type are described e.g. in US Patents 4399190 and 5431284.

However, although said coextruded two-layer films are an improvement compared to the monolayer films of LPDE in relation to said problem, results are not completely satisfactory owing to a poor balance between shrinking and softening properties of the two polymers. We have unexpectedly found that the performance of the hoods made from films of this type is much improved if, holding the LDPE layer outside, the internal layer is made from a particular polyolefin composition containing linear polyethylene and a random propylene copolymer. When the film is heated from outside to induce shrinking, the inner layer does not soften easily and does not stick to the sacks.

Object of the instant invention is therefore an improved two-layer thermoshrinking film, useful for the containment and unitising of pallet loads inside a plastic hood, consisting essentially of:
a) a layer A of low density polyethylene;
b) a layer B made from a composition comprising:
   - 73 to 95% by weight of a copolymer (i) of ethylene with at least one α-olefin CH₂=CHR where R is an alkyl radical having 1 to 10 carbon atoms, said copolymer having density between 0.920 and 0.960 glem³ and a content of α-olefin CH₂=CHR derived units up to 10% by mole;
   - 5 to 27% by weight of a copolymer (ii) of propylene with ethylene and/or at least one α-olefin CH₂=CHR^{I}, where R^{I} is an alkyl radical having 2 to 10 carbon atoms, said copolymer containing 60 to 98% by weight of propylene, said copolymer being characterized by a xylene insoluble fraction higher than 70% by weight; said composition forming layer B having density between 0.915 and 0.950 g/cm³, Melt Index E between 0.1 and 2 g/10' and Melt Flow Ratio lower than 50.

Low density polyethylene forming layer A of the film can be chosen from the typical commercial products having density from 0.915 to 0.930 g/cm³, Melt Index E from 0.1 to 2 g/10' and melting point in the range 105 to 115°C.

Composition forming layer B of the film can be prepared either by mixing copolymer (i) and copolymer (ii) or directly in synthesis by a sequential polymerization process. Preferably composition forming layer B comprises 80 to 90% by weight of copolymer (i) and 10 to 20% by weight of copolymer (ii). Also preferably said composition has density between 0.935 and 0.950 g/cm³, Melt Index E comprised between 0.2 and 1 g/10 minutes and Melt Flow Ratio lower than 35.

The copolymer (i) used in the composition forming layer B has density comprised between 0.920 and 0.960 g/cm³, preferably between 0.930 and 0.950 g/cm³.

In the preparation of copolymer (i) the olefin CH₂=CHR may even be used as a mixture. Preferably the α-olefin CH₂=CHR is selected from propylene, 1-butene, 1-hexene, 1-octene, 4-methyl-1-pentene and mixtures of 1-butene and 1-hexene; more preferably from 1-butene, 1-hexene and mixtures thereof.

The copolymer (i) is prepared by copolymerization of ethylene with at least one α-olefin CH₂=CHR, in the presence of a Ziegler-Natta type catalyst obtained by the reaction of an organometallic compound of a metal from groups II and III of the Periodic Table with a catalytic component comprising a transition metal belonging to groups IV, V or VI of the Periodic Table. Preferably the transition metal compound is supported on a solid carrier comprising magnesium halide in active form. Examples of catalysts usable in the preparation of the copolymer (i) are described in U.S.P. No. 4,218,339 and

U.S.P. No. 4,472,520 the description of which is herein included for reference. The catalysts may also be prepared according to the methods described in the US patents No. 4,748,221 and No. 4,803,251.

Particularly preferred are the catalysts comprising components having regular morphology, for example spherical or nearly spherical. Examples of such catalysts are described in the patent applications EP-A-395083, EP-A-553805 and EP-A-553806.

Copolymer (ii) used in the composition forming layer B can be for example a propylene/α-olefin copolymer containing from 70 to 95% by weight of units derived from propylene and from 5 to 30% by weight of units derived from the α-olefin CH₂=CHR^{I}. Said copolymer (ii), however, preferably is a terpolymer of propylene with ethylene and an α-olefin. In this case the content of units derived from propylene is preferably between 80 and 98% by weight, more preferably between 85 and 96% by weight, the content of units derived from ethylene is preferably between 1 and 10% by weight, more preferably between 2 and 7% by weight and the content of units derived from the α-olefin is preferably between 1 and 10% by weight, more preferably between 2 and 8% by weight. The content of the various units is determined by IR and NMR analysis.

In the preparation of copolymer (ii) the olefin CH₂=CHR^{I} may even be used as a mixture. Preferably the α-olefin CH₂=CHR^{I} is selected from propylene, 1-butene, 1-hexene, 1-octene, 4-methyl-1-pentene and mixtures of 1-butene and 1-hexene; more preferably from 1-butene, 1-hexene and mixtures thereof.

The copolymer (ii) used in the composition forming layer B has a xylene insoluble fraction higher than 70% by weight, preferably higher than 75%, more preferably higher than 80% by weight. This high value is an index of a stereoregular disposition of the propylene units and of a homogeneous distribution of the other monomer units in the copolymer chains.

The enthalpy of melting of copolymer (ii) is generally higher than 50 J/g, preferably higher than 60 J/g, more preferably higher than 70 J/g. The melting temperature of copolymer (ii) is less than 140°C and preferably between 120 and 140°C.

The crystallinity index of copolymer (ii) is generally higher than 50%.

Copolymer (ii) can be conveniently prepared using a highly stereospecific catalyst, for example of the type described in patent application EP-A-395083, the description of which is herein included for reference.

The polyolefin composition forming layer B can be prepared by mixing copolymers (i) and (ii) in the molten state, for example in a mixer having a high homogenizing power. However, said composition is preferably produced by a sequential polymerization process consisting of at least two stages, wherein, in any order, in one stage ethylene and one or more α-olefin CH₂=CHR are polymerized, obtaining a copolymer (i) containing up to 10% by mole of α-olefin CH₂=CHR and having a density between 0.920 and 0.960 g/cm³, and in another stage propylene, with one or more α-olefins CH₂=CHR^{I} and/or ethylene are polymerized, obtaining a copolymer (ii) containing from 60 to 98% by weight of units derived from propylene and having a xylene insoluble fraction greater than 70%. The polymerization is conveniently carried out in a gas phase, using fluidized bed reactors. Examples of processes of this type and of products made by this method are described in the international patent applications WO 93/03078 and WO 95/20009, the description of which is included here for reference purposes.

The thermoshrinkable films of the invention can be conveniently produced by coextrusion of an LDPE polymer and of the composition prepared in order to form layer B, using a blown film method known in the art.

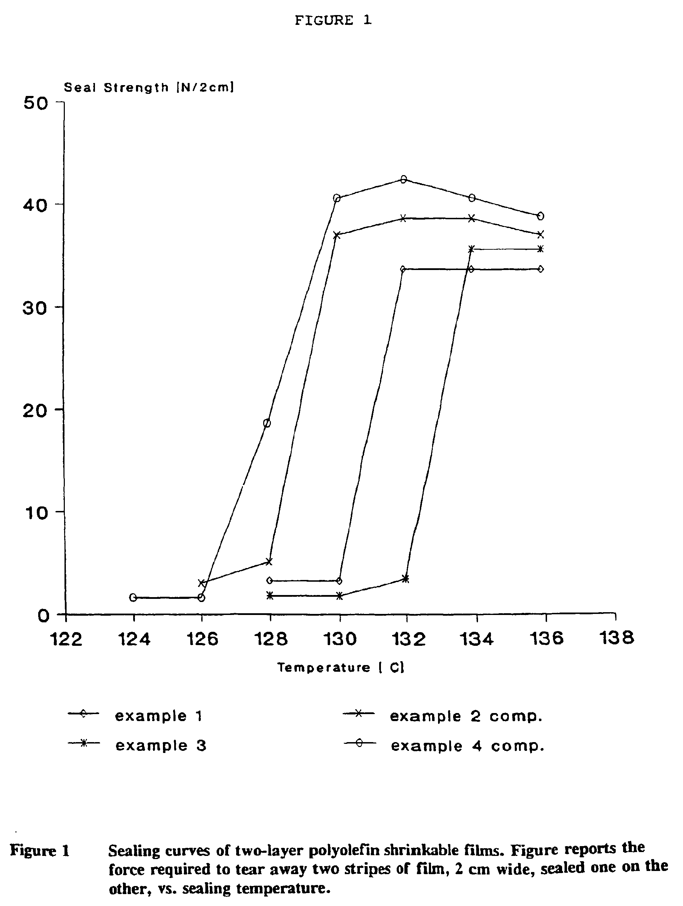

The films of the invention are characterized by a good set of physical and mechanical properties which make them suitable for a broad set of applications in the packaging sector, with particular reference to containment and unitising of goods packed in low density polyethylene sacks. In particular the films of the invention are characterized by quite a good balance of the performance in the Dart Drop Test (impact resistance) on folded and unfolded areas and a good balance of the performance in the Elmendorf Test (tearing resistance) in the machine direction (MD) and in the transversal direction (TD), as reported in Table 2, where they are compared to ordinary two-layer films. Moreover the films of the invention show a significant shift of the sealing curve to the higher temperatures of about 4°C (see Figure 1), which allows thermoshrinking of the film without causing its softening and any adhesion to palletized sacks.

The following examples are given as illustrations and do not restrict the invention. The properties indicated were determined by the following methods:
- Composition of polymers: percentage by weight of the various monomers determined by I.R.;
- Xylene-insoluble fraction: 2 g of polymer are dissolved in 250 cm³ of xylene at 135°C, under stirring. After 20 minutes the solution is left to cool, still under stirring, until the temperature reaches 25°C. After 30 minutes the precipitated insoluble polymer is separated by filtration. The solvent is removed from the solution by evaporation in a stream of nitrogen and the residue is dried under vacuum at 80°C to constant weight. In this way the percentage of polymer soluble in xylene at 25°C is calculated and the percentage of polymer that is insoluble is thus determined;
- Density: ASTM D 1505;
- Melt Index E (MIE): ASTM D 1238, condition E;
- Melt Index F (MIF): ASTM D 1238, condition F;
- Melt Index L (MIL): ASTM D 1238, condition L;
- Melt Flow Ratio (MFR): MIF/MIE
- Dart Test: ASTM D 1709/A;
- 2% Secant Tensile Modulus: ASTM D 882;
- Elmendorf Test: ASTM D 1922;
- Haze: ASTM D 1003;
- Gloss: ASTM D 2467;
- Seal Strength: ASTM F 88

### Example 1

A two-layer film was produced by coextrusion of the commercial LDPE Montell 33, having density 0.922 g/cm³ and MIE 0.3 g/10', with the composition HP-MDPE W1E190, having the following characteristics: density 0.937 g/cm³, MIE 0.63 g/10', Melt Flow Ratio 29, xylene insoluble fraction 97.4% by weight, melting point 134.5°C and melting heat 174.9 J/g. Composition HP-MDPE W1E190 was obtained directly in a gas-phase polymerization process sequentially producing an ethylene copolymer (i) having density 0.943 g/cm³ and a propylene copolymer (ii) made of 93% by weight of propylene, 5% by weight of 1-butene and 2% by weight of ethylene, with MIL 13.5 g/10' and xylene-insoluble fraction 92%. Polymerization process was operated as described in the international patent application WO 95/20009. Overall contents of the monomer units in the composition HP-MDPE W1E190 were the following: ethylene 85.6% by weight, propylene 12.8% by weight, 1-butene 1.6% by weight.

Coextrusion to obtain the two-layer film of the invention was made by the blowing method. Detail of the extrusion operating conditions is given in Table 1. Experimentally a three-extruders system producing a three-layer film was used, but in the final film layers from the first two extruders are indistinguishable, being made of the same polymer, and together form layer A. Total thickness of the film was 135 micron, 85% of it due to a layer of the LDPE and 15% due to a layer of the composition HP-MDPE W1E190. Characterization of the two-layer coextruded film, oriented to the production of thermoshrinkable non-sticking hoods, is reported in Table 2 and in Figure 1. Sealed test specimens for seal strength measurement were prepared by: a) superimposing two stripes of film, 10 cm long in the extrusion direction and 5 cm wide; b) making a 2 cm wide sealing along one of the short sides of the stripes using a heating bar sealing device, operating at different temperatures according to Figure 1, with pressure 1.27 kg/cm², for a heating time of 5 seconds; and c) cutting two specimens 5 cm long in the extrusion direction and 2 cm wide from each couple of sealed stripes. Figure 1 reports the force according to ASTM F 88 necessary to tear apart the two stripes of the specimens sealed at different temperature.

### Example 2 (comparative)

Example 1 was repeated but replacing the composition HP-MDPE W1E190 with product MDPE H900 commercialized by Borealis, which has a wider molecular weight distribution and is so characterized: density 0.943 g/cm³, MIE 0.25 g/10', Melt Flow Ratio 71. Total thickness of the film was 131 micron, 85% of it due to a layer of LDPE and 15% due to a layer of composition MDPE H900. Characterization of the coextruded film is reported in Table 2 and in Figure 1.

### Example 3

A two-layer film was produced by coextrusion of the commercial LDPE Bralen 03-23, having density 0.923 g/cm³ and MIE 0.3 g/cm³, with the composition HP-MDPE W1E154 having the following characteristics: density 0.946 g/cm³, MIE 0.55 g/10', Melt Flow Ratio 31, xylene insoluble fraction 97.3% by weight, melting point 137.9°C and melting heat 200 J/g. Composition HP-MDPE W1E154 was obtained directly in a gas-phase polymerization process sequentially producing an ethylene copolymer (i) having density 0.952 g/cm³ and a propylene copolymer (ii) made of 93% by weight of propylene, 5% by weight of 1-butene and 2% by weight of ethylene, with MIL 15 g/10' and xylene-insoluble fraction 92%. Polymerization process was operated as described in the international patent application WO 95/20009. Overall contents of the monomer units in the composition HP-MDPE W1E154 were the following: ethylene 87.7% by weight, propylene 11.5% by weight, 1-butene 0.8% by weight.

Coextrusion to obtain the two-layer film of the invention was made by the blowing method. Detail of the extrusion operating conditions is given in Table 1. Total thickness of the film was 125 micron, 85% of it due to a layer of LDPE and 15% due to a layer of composition HP-MDPE W1E154. Characterization of the coextruded film, oriented to the production of thermoshrinkable non-sticking hoods, is reported in Table 2 and in Figure 1.

### Example 4 (comparative)

Example 3 was repeated but replacing the composition HP-MDPE W1E154 with product MDPE Borealis H900 having a wider molecular weight distribution and so characterized: density 0.943 g/cm³, MIE 0.25 g/10', Melt Flow Ratio 71. Total thickness of the coextruded film was 129 micron, 85% of it due to a layer of LDPE and 15% due to a layer of MDPE H900. Characterization of the coextruded film is reported in Table 2 and in Figure 1.

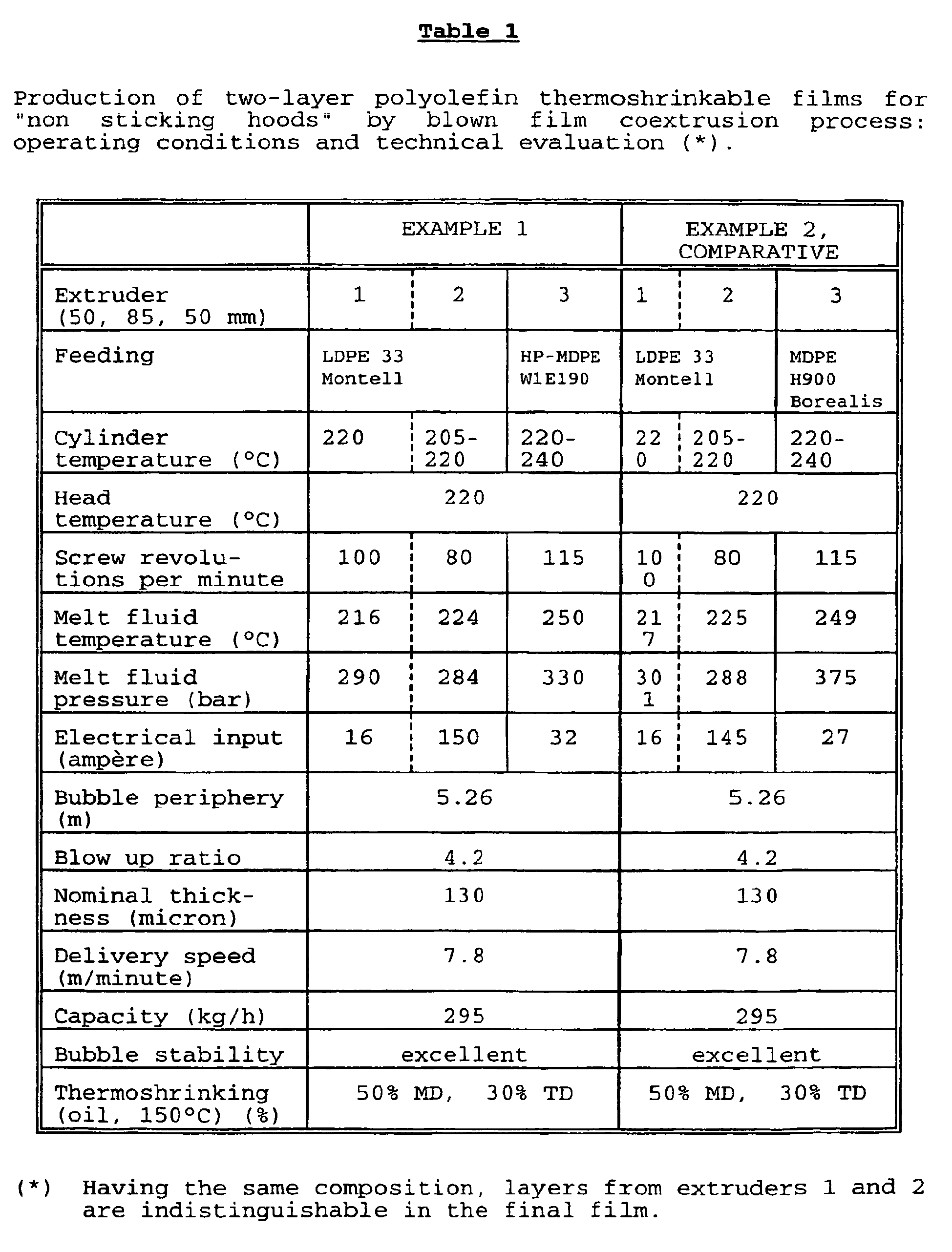

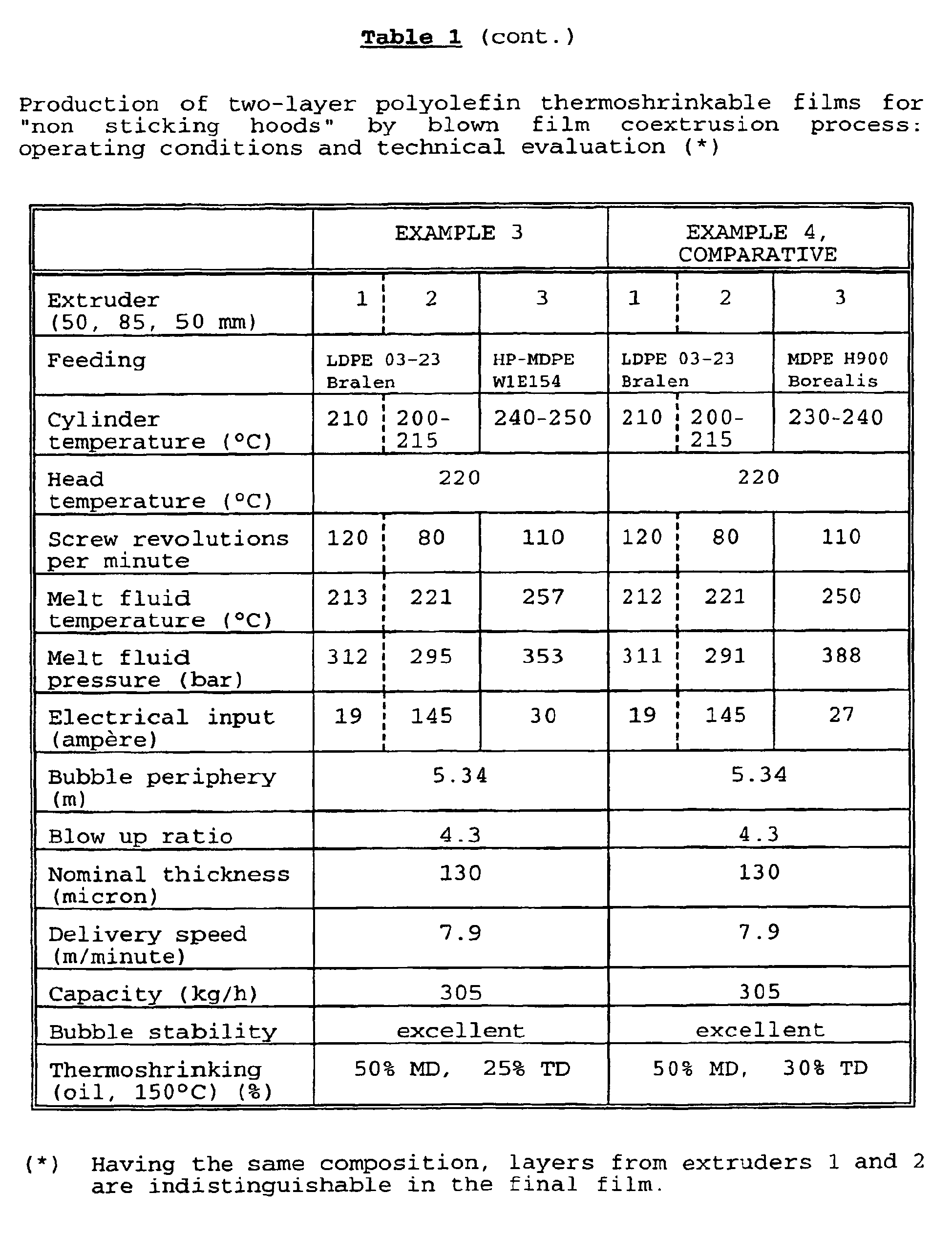

**Table 2**

| Characterization of two-layer polyolefin thermoshrinkable films for "non-sticking hoods" | | | | | |
|---|---|---|---|---|---|
| **Property / test** | **Unit** | **Example 1** | **Example 2, comparative** | **Example 3** | **Example 4, comparative** |
| Outer Layer, 85% of total thickness | | LDPE Montell 33 | LDPE Montell 33 | LDPE Bralen 03-23 | LDPE Bralen 03-23 |
| Inner Layer, 15% of total thickness | | HP-MDPE W1E190 | MDPE Borealis H900 | HP-MDPE W1E154 | MDPE Borealis H900 |
| Real Total Thickness | micron | 135 | 131 | 125 | 129 |
| Dart Test on Unfolded Area, ASTM 1709/A | g | 275 | 317 | 335 | 355 |
| Dart Test on Folded Area, ASTM 1709/A | g | 267 | 279 | 292 | 213 |
| Dart Test, Fold/Unfold Ratio | % | 97 | 88 | 88 | 60 |
| 2% Secant Tensile Modulus TD, ASTM D882 | MPa | | | 267 | 252 |
| 2% Secant Tensile Modulus MD, ASTM D882 | MPa | | | 254 | 242 |
| Elmendorf Test TD, ASTM D-1922 | N | 6.89 | 7.10 | 6.9 | 7.2 |
| Elmendorf Test MD, ASTM D-1922 | N | 5.80 | 5.15 | 4.8 | 4.1 |
| Elmendorf Test MD/TD Ratio | % | 84 | 71 | 70 | 57 |
| Haze, ASTM D-1003 | % | | | 52 | 54 |
| Gloss, ASTM D-2467 | % | | | 51 | 46 |

| | | | | | |
|---|---|---|---|---|---|
| Sealing data are reported in Figure 1. | | | | | |

## Claims

1. A two-layer coextruded thermoshrinkable film consisting essentially of:
a) a layer A of low density polyethylene;
b) a layer B made from a composition comprising:
- 73 to 95% by weight of a copolymer (i) of ethylene with at least one α-olefin CH₂=CHR where R is an alkyl radical having 1 to 10 carbon atoms, said copolymer (i) having density between 0.920 and 0.960; g/cm³ and a content of α-olefin CH₂=CHR derived units up to 10% by mole;
- 5 to 27% by weight of a copolymer (ii) of propylene with ethylene and/or at least one α-olefin CH₂=CHR^{I},
where R^{I} is an alkyl radical having 2 to 10 carbon atoms, said copolymer (ii), containing 60 to 98% by weight of propylene derived units and being moreover **characterized by** a xylene insoluble fraction measured by dissolving 2 g of polymer in 250 cm³ of xylene at 135°C, leaving to cool to 25 °C under stirring and separating the insoluble polymer by filtration, higher than 70% by weight;
said composition forming layer B having density between 0.915 and 0.950 g/cm³, Melt Index E, measured according to ASTM D 1238, between 0.1 and 2 g/10' and Melt Flow Ratio, MIF/MIE, measured according to ASTM D 1238, lower than 50.

2. A film according to claim 1, wherein low density polyethylene forming layer A is a polymer having density from 0.915 to 0.930 g/cm³, Melt Index E from 0.1 to 2 g/10' and melting point in the range 105 to 115°C.

3. A film according to claim 1, wherein the composition forming layer B comprises 80 to 90% by weight of copolymer (i) and 10 to 20% by weight of copolymer (ii).

4. A film according to claim 1, wherein the composition forming layer B has density between 0.935 and 0.950 g/cm³, Melt Index E between 0.2 and 1 g/10' and Melt Flow Ratio lower than 35.

5. A film according to claim 1, wherein the copolymer (i) has density between 0.930 and 0.950 g/cm³

6. A film according to claim 1, wherein the copolymer (ii) has a xylene insoluble fraction higher than 75% by weight.

7. A film according to claim 1, wherein the copolymer (ii) shows a melting point comprised between 120 and 140°C.

8. A film according to claim 1, wherein the α-olefin CH₂=CHR used in copolymer (i) is propylene, 1-butene, 1-hexene, 1-octene, 4-methyl-1-pentene or a mixture thereof.

9. A film according to claim 1, wherein the α-olefin CH₂=CHR^{I} used in copolymer (ii) is 1-butene, 1-hexene, 1-octene, 4-methyl-1-pentene or a mixture thereof.

10. A film according to claim 1 wherein copolymer (ii) contains 70 to 95% by weight of units derived from propylene and 5 to 30% by weight of units derived from α-olefin CH₂=CHR^{I}.

11. A film according to claim 1, wherein copolymer (i) is a copolymer of ethylene with 1-butene and copolymer (ii) is a copolymer of propylene with ethylene and 1-butene.

12. A film according to claim 1, wherein copolymer (ii) contains 80 to 98% by weight of units derived from propylene, 1 to 10% by weight of units derived from ethylene and 1 to 10% by weight of units derived from α-olefin CH₂=CHR^{I}.

## Patentansprüche

1. Zweischichtige coextrudierte wärmeschrumpfbare Folie, im wesentlichen bestehend aus:
a) einer Schicht A aus Polyethylen niedriger Dichte;
b) einer Schicht B aus einer
- 73 bis 95 Gew.-% eines Copolymers (i) von Ethylen mit mindestens einem α-Olefin CH₂=CHR, worin R für einen Alkylrest mit 1 bis 10 Kohlenstoffatomen steht, das eine Dichte zwischen 0,920 und 0,960 g/cm³ und einen Gehalt an von α-Olefin CH₂=CHR abgeleiteten Einheiten von bis zu 10 Mol-% aufweist, und
- 5 bis 27 Gew.-% eines Copolymers (ii) von Propylen mit Ethylen und/oder mindestens einem α-Olefin CH₂=CHR^{I}, worin R^{I} für einen Alkylrest mit 2 bis 10 Kohlenstoffatomen steht, das 60 bis 98 Gew.-% von Propylen abgeleitete Einheiten enthält und außerdem durch eine in Xylol unlösliche Fraktion, gemessen durch Lösen von 2 g Polymer in 250 cm³ Xylol bei 135°C, Abkühlenlassen auf 25°C unter Rühren und Abfiltrieren des unlöslichen Polymers, von mehr als 70 Gew.-% **gekennzeichnet** ist,
enthaltenden Zusammensetzung,
wobei die die Schicht B bildende Zusammensetzung eine Dichte zwischen 0,915 und 0,950 g/cm³, einen Schmelzindex E, gemessen gemäß ASTM D 1238, zwischen 0,1 und 2 g/10 min und ein Schmelzflußverhältnis MIF/MIE, gemessen gemäß ASTM D 1238, von weniger als 50 aufweist.

2. Folie nach Anspruch 1, in der es sich bei dem die Schicht A bildenden Polyethylen niedriger Dichte um ein Polymer mit einer Dichte von 0,915 bis 0,930 g/cm³, einem Schmelzindex E von 0,1 bis 2 g/10 min und einem Schmelzpunkt im Bereich von 105 bis 115°C handelt.

3. Folie nach Anspruch 1, in der die die Schicht B bildende Zusammensetzung 80 bis 90 Gew.-% Copolymer (i) und 10 bis 20 Gew.-% Copolymer (ii) enthält.

4. Folie nach Anspruch 1, in der die die Schicht B bildende Zusammensetzung eine Dichte zwischen 0,935 und 0,950 g/cm³, einen Schmelzindex E zwischen 0,2 und 1 g/10 min und ein Schmelzflußverhältnis von weniger als 35 aufweist.

5. Folie nach Anspruch 1, in der das Copolymer (i) eine Dichte zwischen 0,935 und 0,950 g/cm³ aufweist.

6. Folie nach Anspruch 1, in der das Copolymer (ii) eine in Xylol unlösliche Fraktion von mehr als 75 Gew.-% aufweist.

7. Folie nach Anspruch 1, in der das Copolymer (ii) einen Schmelzpunkt zwischen 120 und 140°C zeigt.

8. Folie nach Anspruch 1, in der es sich bei dem in Copolymer (i) verwendeten α-Olefin CH₂=CHR um Propylen, 1-Buten, 1-Hexen, 1-Octen, 4-Methyl-1-penten oder ein Gemisch davon handelt.

9. Folie nach Anspruch 1, in der es sich bei dem in Copolymer (ii) verwendeten α-Olefin CH₂=CHR^{I} um 1-Buten, 1-Hexen, 1-Octen, 4-Methyl-1-penten oder ein Gemisch davon handelt.

10. Folie nach Anspruch 1, in der das Copolymer (ii) 70 bis 95 Gew.-% von Propylen abgeleitete Einheiten und 5 bis 30 Gew.-% von α-Olefin CH₂=CHR^{I} abgeleitete Einheiten enthält.

11. Folie nach Anspruch 1, in der es sich bei Copolymer (i) um ein Copolymer von Ethylen mit 1-Buten und bei dem Copolymer (ii) um ein Copolymer von Propylen mit Ethylen und 1-Buten handelt.

12. Folie nach Anspruch 1, in der das Copolymer (ii) 80 bis 98 Gew.-% von Propylen abgeleitete Einheiten, 1 bis 10 Gew.-% von Ethylen abgeleitete Einheiten und 1 bis 10 Gew.-% von α-Olefin CH₂=CHR^{I} abgeleitete Einheiten enthält.

## Revendications

1. Film thermorétractable à deux couches co-extrudées comprenant essentiellement :
a) une couche A de polyéthylène de basse densité ;
b) une couche B issue d'une composition comprenant :
- 73 à 95 % en poids d'un copolymère (i) d'éthylène avec au moins une α-oléfine CH₂=CHR où R est un radical alkyle comportant 1 à 10 atomes de carbone, ledit copolymère (i) présentant une densité entre 0,920 et 0,960 g/cm³ et une teneur en unités dérivées d'α-oléfine CH₂=CHR allant jusqu'à 10 % en mole ;
- 5 à 27 % en poids d'un copolymère (ii) de propylène avec de l'éthylène et/ou au moins une α-oléfine CH₂=CHR^{I}, où R^{I} est un radical alkyle comportant 2 à 10 atomes de carbone, ledit copolymère (ii) contenant 60 à 98 % en poids d'unités dérivées de propylène et étant en outre **caractérisé par** une fraction insoluble dans le xylène, mesurée en dissolvant 2 g de polymère dans 250 cm³ de xylène à 135° C, en laissant refroidir à 25° C en agitant et en séparant le polymère insoluble par filtration, supérieure à 70 % en poids ;
ladite composition formant une couche B présentant une densité entre 0,915 et 0,950 g/cm³, un indice de fusion E, mesuré selon l'ASTM D 1238, entre 0,1 et 2 g/10' et un rapport de fluidité MIF/MIE, mesuré selon l'ASTM D 1238, inférieur à 50.

2. Film selon la revendication 1, dans lequel le polyéthylène de basse densité formant la couche A est un polymère présentant une densité de 0,915 à 0,930 g/cm³, un indice de fusion E de 0,1 à 2 g/10' et un point de fusion de l'ordre de 105 à 115° C.

3. Film selon la revendication 1, dans lequel la composition formant la couche B comprend 80 à 90 % en poids de copolymère (i) et 10 à 20 % en poids de copolymère (ii).

4. Film selon la revendication 1, dans lequel la composition formant la couche B présente une densité entre 0,935 et 0,950 g/cm³, un indice de fusion E entre 0,2 et 1 g/10' et un rapport de fluidité inférieur à 35.

5. Film selon la revendication 1, dans lequel le copolymère (i) présente une densité entre 0,930 et 0,950 g/cm³.

6. Film selon la revendication 1, dans lequel le copolymère (ii) présente une fraction insoluble dans le xylène supérieure à 75 % en poids.

7. Film selon la revendication 1, dans lequel le copolymère (ii) présente un point de fusion compris entre 120 et 140° C.

8. Film selon la revendication 1, dans lequel l'α-oléfine CH₂=CHR utilisée dans le copolymère (i) est le propylène, le 1-butène, le 1-hexène, le 1-octène, le 4-méthyl-1-pentène ou leur mélange.

9. Film selon la revendication 1, dans lequel l'α-oléfine CH₂=CHR^{I} utilisée dans le copolymère (ii) est le 1-butène, le 1-hexène, le 1-octène, le 4-méthyl-1-pentène ou leur mélange.

10. Film selon la revendication 1, dans lequel le copolymère (ii) contient 70 à 95 % en poids d'unités dérivées de propylène et 5 à 30 % en poids d'unités dérivées d'α-oléfine CH₂=CHR^{I}.

11. Film selon la revendication 1, dans lequel le copolymère (i) est un copolymère d'éthylène avec le 1-butène et le copolymère (ii) est un copolymère de propylène avec l'éthylène et le 1-butène.

12. Film selon la revendication 1, dans lequel le copolymère (ii) contient 80 à 98 % en poids d'unités dérivées de propylène, 1 à 10 % en poids d'unités dérivées d'éthylène et 1 à 10 % en poids d'unités dérivées d'α-oléfine CH₂=CHR^{I}.
